# EUROPEAN PATENT APPLICATION

(11) **EP 4 832 236 A1**
(43) Date of publication of application: **28.10.2026**
(21) Application number: 24907101.0
(22) Date of filing: 27.11.2024
(51) Int. Cl.: H01M 50/586, H01M 10/052, H01M 10/0587, H01M 50/107, H01M 50/595

(54) **NON-AQUEOUS ELECTROLYTE SECONDARY BATTERY**

(30) Priority: 21.12.2023 JP 2023215805
(71) Applicant: Panasonic Intellectual Property Management Co., Ltd., Kadoma-shi, Osaka 571-0057 (JP)
(72) Inventor: KAWAGUCHI, Takashi, Kadoma-shi, Osaka 571-0057 (JP); OKIMOTO, Ryota, Kadoma-shi, Osaka 571-0057 (JP)
(74) Representative: Eisenführ Speiser
(86) International application number: PCT/JP2024/042053
(87) International publication number: WO 2025/134714

(57) **Abstract**

Provided is a non-aqueous electrolyte secondary battery comprising an electrode body in which a belt-form positive electrode (11) and a belt-form negative electrode (12) are wound with a separator interposed therebetween, wherein the non-aqueous electrolyte secondary battery is characterized in that: the surface of the positive electrode (11) is provided with a positive electrode current collector exposed portion (34) where a positive electrode current collector is exposed; the positive electrode current collector exposed portion (34) is covered by a protective tape (50); the protective tape (50) has a facing region (51) that faces the negative electrode (12), and a non-facing region (52) that does not face the negative electrode (12); and the non-facing region (52) is provided with at least one or more notches (53) that extend from an upper end (50A) of the protective tape (50) toward a lower-end (50B) side of the protective tape (50).

## Description

### TECHNICAL FIELD

The present disclosure relates to a non-aqueous electrolyte secondary battery.

### BACKGROUND ART

In recent years, high-capacity and high-power non-aqueous electrolyte secondary batteries have been under development. Such high capacity and high power of the battery cause a large quantity of heat to be generated when an internal short circuit of the battery occurs, and it is required to reduce the risk of occurrence of the internal short circuit. On the surface of the positive electrode of the battery, there is formed a positive electrode exposed portion from which the surface of the positive electrode current collector is exposed, and a positive electrode lead for current collection is connected to the positive electrode exposed portion. PATENT LITERATURE 1 discloses a method of reducing the risk of occurrence of an internal short circuit by covering the positive electrode lead with an insulating protective tape.

### CITATION LIST

### PATENT LITERATURE

PATENT LITERATURE 1: Japanese Unexamined Patent Application Publication No. 2003-132875

### SUMMARY

In the manufacturing processes of the battery, a load may be applied to a wound electrode assembly from the outside. For example, when the electrode assembly is pressed from above the electrode assembly, a load is applied to a protective tape, so that there is a possibility that the protective tape is bent. When the protective tape is bent, the load is also applied to the negative electrode facing the protective tape, so that there is a possibility that an electrode plate is damaged.

A non-aqueous electrolyte secondary battery which is an aspect of the present disclosure comprises an electrode assembly in which a belt-shaped positive electrode and a belt-shaped negative electrode are wound with a separator interposed between the positive electrode and the negative electrode, and a bottomed cylindrical housing can that houses the electrode assembly, in which the positive electrode has a positive electrode current collector and a positive electrode mixture layer provided on a surface of the positive electrode current collector, a positive electrode current collector exposed portion from which the positive electrode current collector is exposed is provided on a surface of the positive electrode, the positive electrode current collector exposed portion is covered with a protective tape, the protective tape has a facing region facing the negative electrode and a non-facing region not facing the negative electrode, and the non-facing region is provided with at least one or more cuts or notches extending from an upper end of the protective tape toward a lower end side of the protective tape.

According to the non-aqueous electrolyte secondary battery which is an aspect of the present disclosure, it is possible to reduce damage to an electrode plate due to bending of the protective tape while reducing occurrence of an internal short circuit.

### BRIEF DESCRIPTION OF DRAWING

FIG. 1 is an axial sectional view of a non-aqueous electrolyte secondary battery which is an example of an embodiment.
FIG. 2 is a perspective view of an electrode assembly included in the non-aqueous electrolyte secondary battery which is an example of the embodiment.
FIG. 3 is a diagram illustrating a positive electrode and a negative electrode in a developed state which are included in the non-aqueous electrolyte secondary battery which is an example of the embodiment.
FIG. 4 is a sectional view of the positive electrode included in the non-aqueous electrolyte secondary battery which is an example of the embodiment.
FIG. 5 is a diagram illustrating a positive electrode and a negative electrode in a developed state which are included in a non-aqueous electrolyte secondary battery which is another example of an embodiment.
FIG. 6 is a diagram illustrating a positive electrode and a negative electrode in a developed state which are included in a non-aqueous electrolyte secondary battery which is another example of an embodiment.

### DESCRIPTION OF EMBODIMENTS

Hereinafter, an example of embodiments of a cylindrical battery according to the present disclosure will be described in detail with reference to the drawings. Each of embodiments described below is merely an example, and the present disclosure is not limited to the following embodiments. Any form made up by selectively combining each constituent element of the embodiments described below is encompassed in the present disclosure.

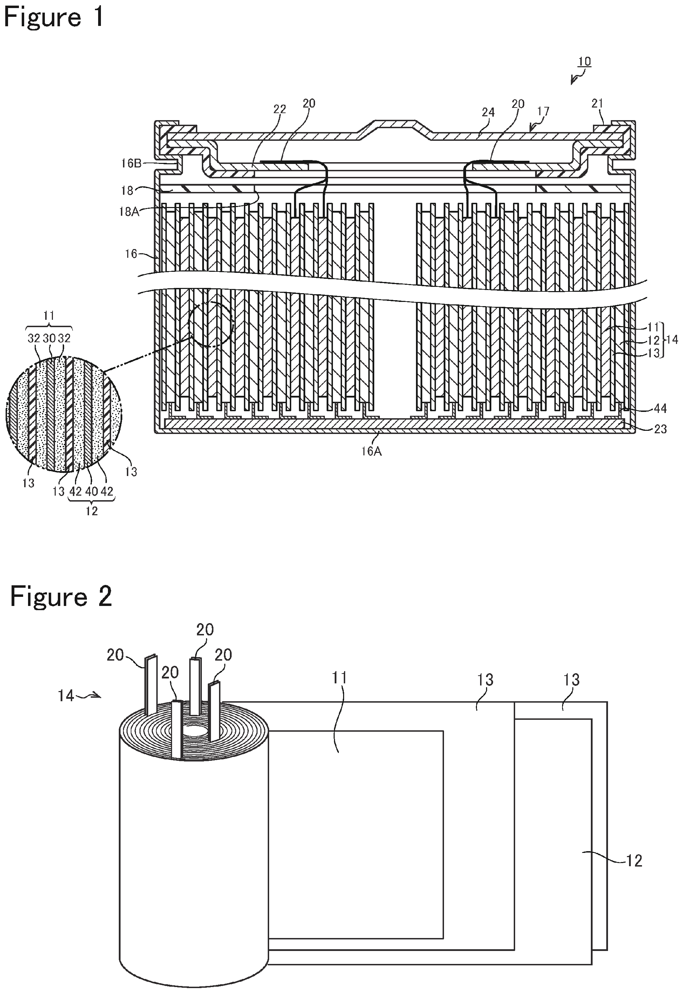

A configuration of a non-aqueous electrolyte secondary battery 10 of the present embodiment will be described with reference to FIGS. 1 and 2. FIG. 1 is a diagram schematically illustrating an axial cross section of the non-aqueous electrolyte secondary battery 10, and FIG. 2 is a perspective view of an electrode assembly 14 included in the non-aqueous electrolyte secondary battery 10.

As illustrated in FIGS. 1 and 2, the non-aqueous electrolyte secondary battery 10 comprises the electrode assembly 14 in which a positive electrode 11 and a negative electrode 12 are wound with a separator 13 interposed therebetween, a non-aqueous electrolyte (not illustrated), a housing can 16 that houses the electrode assembly 14 and the non-aqueous electrolyte, and a sealing assembly 17 with which an opening portion of the housing can 16 is capped. In this specification, the sealing assembly 17 side of the non-aqueous electrolyte secondary battery 10 is defined as "the upper side", and the bottom portion 16A side of the housing can 16 is defined as "the lower side".

The electrode assembly 14 has the positive electrode 11, the negative electrode 12, and the separator 13, and has a structure in which the positive electrode 11 and the negative electrode 12 are spirally wound with the separator 13 interposed therebetween. Each of the positive electrode 11, the negative electrode 12, and the separator 13 that constitute the electrode assembly 14 is a band-shaped elongate body, and the positive electrode 11, the negative electrode 12, and the separator 13 are spirally wound so as to be alternately stacked in a radial direction of the electrode assembly 14. The negative electrode 12 projects downward with respect to the positive electrode 11 and the separator 13. That is, the negative electrode 12 is formed to be longer in the longitudinal direction and the width direction than the positive electrode 11. The two separators 13 are each formed to be one size larger than the positive electrode 11, and are disposed so as to interpose, for example, the positive electrode 11 therebetween.

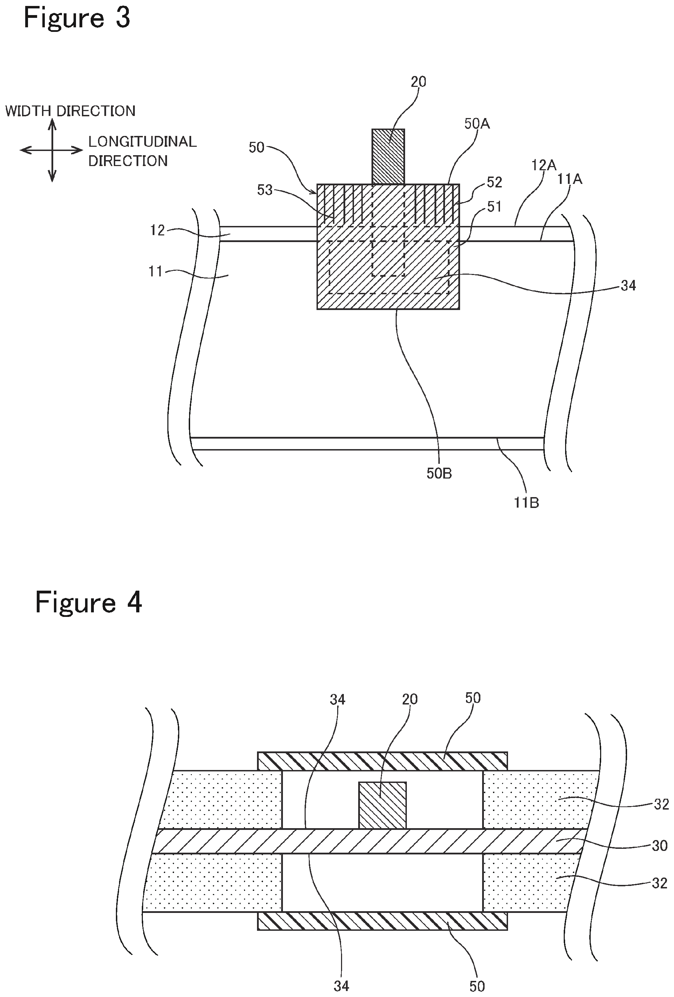

The electrode assembly 14 has a positive electrode lead 20 connected to a positive electrode current collector exposed portion 34 (see FIG. 3) of the positive electrode 11 by means of welding or the like. In the present embodiment, the electrode assembly 14 has a plurality of positive electrode leads 20. Alternatively, the number of positive electrode leads 20 may be one. The electrode assembly 14 may have a negative electrode lead in addition to the positive electrode leads 20. The number of negative electrode leads may be one or plural.

The positive electrode 11 has a positive electrode current collector 30, and a positive electrode mixture layer 32 formed on the positive electrode current collector 30. For the positive electrode current collector 30, a foil of metal such as aluminum or an aluminum alloy, which is stable within a potential range of the positive electrode 11, a film in which such a metal is disposed on a surface layer thereof, or the like can be used. A suitable positive electrode current collector 30 is a metallic foil the main component of which is aluminum or an aluminum alloy. The thickness of the positive electrode current collector 30 is, for example, greater than or equal to 10 µm and less than or equal to 30 µm.

The positive electrode mixture layer 32 includes a positive electrode active material, a conductive agent, and a binder, and is preferably formed on each surface of the positive electrode current collector 30 except for the positive electrode current collector exposed portion 34 to which the positive electrode lead 20 is welded. Although not described later in detail, the positive electrode current collector exposed portion 34 is covered with a protective tape 50 (see FIG. 3). The positive electrode 11 can be produced, for example, by applying a positive electrode mixture slurry including a positive electrode active material, a conductive agent, a binder, and the like on the positive electrode current collector 30, drying the resulting coating film, and then compressing the coating film to form the positive electrode mixture layer 32 on each surface of the positive electrode current collector 30.

The positive electrode mixture layer 32 includes, as the positive electrode active material, a lithium metal composite oxide in a particulate form. The lithium metal composite oxide is a composite oxide containing a metal element such as Co, Mn, Ni, or Al in addition to Li. The metal element constituting the lithium metal composite oxide is, for example, at least one selected from the group consisting of Mg, Al, Ca, Sc, Ti, V, Cr, Mn, Fe, Co, Ni, Cu, Zn, Ga, Ge, Y, Zr Sn, Sb, W, Pb, and Bi.
Among these, at least one selected from the group consisting of Co, Ni, and Mn is preferably contained. Suitable examples of the composite oxide include a lithium metal composite oxide containing Ni, Co, and Mn, or a lithium metal composite oxide containing Ni, Co, and Al.

Examples of the conductive agent included in the positive electrode mixture layer 32 include carbon materials including carbon black such as acetylene black and Ketjenblack, graphite, carbon nanotubes (CNT), carbon nanofibers, and graphene. Examples of the binder included in the positive electrode mixture layer 32 include fluororesins such as polytetrafluoroethylene (PTFE) and polyvinylidene fluoride (PVDF), polyacrylonitrile (PAN), polyimides, acrylic resins, and polyolefins. These resins may be used in combination with carboxymethyl cellulose (CMC) or a salt thereof, a polyethylene oxide (PEO), or the like.

The negative electrode 12 has a negative electrode current collector 40, and a negative electrode mixture layer 42 formed on the negative electrode current collector 40. For the negative electrode current collector 40, a foil of metal such as copper or a copper alloy, which is stable within a potential range of the negative electrode 12, a film in which such a metal is disposed on a surface layer thereof, or the like can be used. The negative electrode mixture layer 42 includes a negative electrode active material, a binder, and, when necessary, a conductive agent, and is preferably formed on each surface of the negative electrode current collector 40 except for a negative electrode current collector exposed portion 44, which will be described later. The negative electrode 12 can be produced by applying a negative electrode mixture slurry including a negative electrode active material, a binder, and the like on a surface of the negative electrode current collector 40, drying the resulting coating film, and then compressing the coating film to form the negative electrode mixture layer 42 on each surface of the negative electrode current collector 40.

The negative electrode mixture layer 42 generally includes, as the negative electrode active material, a carbon material that reversibly occludes and releases lithium ions. A suitable example of the carbon material is graphite including natural graphite such as flaky graphite, massive graphite, and earthy graphite, and artificial graphite such as massive artificial graphite (MAG) and graphitized mesophase carbon microbeads (MCMB). A material including at least one of an element such as Si or Sn that forms an alloy with Li and a material that contains such an element may be used as the negative electrode active material. Among these, the composite material containing Si is preferable.

Suitable examples of the composite material containing Si include a material in which Si microparticles are dispersed in an SiO₂ phase or a silicate phase such as lithium silicate, and a material in which Si microparticles are dispersed in an amorphous carbon phase. For example, a conductive layer such as a carbon coating film is formed on the surfaces of particles of the composite material. Combined use of the carbon material and the composite material containing Si as the negative electrode active material is preferred from the perspective of achieving both high capacity and high durability of the battery.

As the binder included in the negative electrode mixture layer 42, fluororesins, PAN, polyimides, acrylic resins, and polyolefins or the like may be used as in the case of the positive electrode mixture layer 32, but a styrene-butadiene rubber (SBR) is preferably used. In addition, the negative electrode mixture layer 42 preferably includes CMC or a salt thereof, polyacrylic acid (PAA) or a salt thereof, polyvinyl alcohol (PVA), or the like. Among these, use of SBR in combination with CMC or a salt thereof or PAA or a salt thereof is preferred. The negative electrode mixture layer 42 may include a conductive agent such as CNT.

The negative electrode 12 has, at an axial lower end, the negative electrode current collector exposed portion 44 from which the negative electrode current collector 40 is exposed without the negative electrode mixture layer 42 being provided. The negative electrode current collector exposed portion 44 is provided over a range from a winding start-side end to a winding finish-side end of the negative electrode 12 in the longitudinal direction. Therefore, a lower end portion of the electrode assembly 14 in the axial direction is constituted of the negative electrode current collector exposed portion 44. The width (axial length) of the negative electrode current collector exposed portion 44 is, for example, greater than or equal to 2 mm and less than or equal to 20 mm.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. In addition, on the surface of the separator 13, there may be formed a layer made of a high heat-resistant resin such as an aramid resin. A filler layer including an inorganic filler may be formed at an interface between the separator 13 and at least one of the positive electrode 11 and the negative electrode 12.

The non-aqueous electrolyte has lithium ion conductivity. The non-aqueous electrolyte may be a liquid electrolyte (electrolyte solution), or may be a solid electrolyte.

The liquid electrolyte (electrolyte solution) includes a non-aqueous solvent, and an electrolyte salt dissolved in the non-aqueous solvent. For the non-aqueous solvent, for example, esters, ethers, nitriles, amides, or mixed solvents of two or more of these are used. Examples of the non-aqueous solvent include ethylene carbonate (EC), ethyl methyl carbonate (EMC), dimethyl carbonate (DMC), diethyl carbonate (DEC), and mixed solvents of these. The non-aqueous solvent may contain a halogen-substituted product (for example, fluoroethylene carbonate) obtained by replacing at least some of hydrogen atoms in these solvents with a halogen atom such as fluorine. For the electrolyte salt, for example, a lithium salt such as LiPF₆ is used.

As a solid electrolyte, for example, a solid or gel-like polymer electrolyte, an inorganic solid electrolyte, or the like can be used. As the inorganic solid electrolyte, a material known in an all-solid lithium ion secondary battery and the like (for example, an oxide-based solid electrolyte, a sulfide-based solid electrolyte, and a halide-based solid electrolyte) can be used. The polymer electrolyte includes, for example, a lithium salt and a matrix polymer, or a non-aqueous solvent, a lithium salt, and a matrix polymer. As the matrix polymer, for example, a polymer material which absorbs and gels the non-aqueous solvent is used. Examples of the polymer material include fluororesin, acrylic resin, and polyether resin.

An insulating plate 18 is disposed above the electrode assembly 14. The positive electrode lead 20 extends toward the sealing assembly 17 side through a through hole 18A provided in the insulating plate 18. Then, the positive electrode lead 20 is bent along an upper surface of an upper current collecting plate 22 constituting the sealing assembly 17 and is joined to the upper surface of the upper current collecting plate 22 by means of welding or the like. Thus, the sealing assembly 17 serves as a positive electrode terminal.

As described above, the negative electrode current collector exposed portion 44 is provided at a lower end of the electrode assembly 14. Then, the negative electrode current collector exposed portion 44 is bent radially inward at the lower end, and is joined to a lower current collecting plate 23 provided below the electrode assembly 14 by means of welding or the like. The lower current collecting plate 23 is joined to an inner surface of a bottom portion 16A of the housing can 16. Thus, the housing can 16 serves as a negative electrode terminal.

The housing can 16 is a bottomed cylindrical metallic container which is open at one side thereof in the axial direction. An opening portion of the housing can 16 is capped with the sealing assembly 17. A gasket 21 made of a resin material is provided between the housing can 16 and the sealing assembly 17. Providing the gasket 21 makes it possible to achieve the sealability inside the battery and the insulation property between the housing can 16 and the sealing assembly 17. That is, the gasket 21 has a role of a seal material for maintaining the airtightness of the inside of the battery, and a role as an insulating member for insulating the sealing assembly 17 from the housing can 16.

The housing can 16 has a grooved portion 16B formed by causing a part of a side wall to project inward and configured to support the sealing assembly 17. The grooved portion 16B is preferably formed annularly along the circumferential direction of the housing can 16, and supports the sealing assembly 17 on its upper surface. The grooved portion 16B can be formed by, for example, recessing the one part of the side wall of the housing can 16 toward the radially inward side by a radially inward spinning process.

The sealing assembly 17 has a function of closing the opening portion of the housing can 16. In the present embodiment, the sealing assembly 17 is constituted of the upper current collecting plate 22 to which the positive electrode lead 20 is joined, and a sealing plate 24 that covers the upper current collecting plate 22. The sealing assembly 17 is crimp-fixed to the opening portion of the housing can 16 via the gasket 21. The sealing assembly 17 may have any configuration that can close the opening portion of the housing can 16.

The upper current collecting plate 22 is an annular metallic plate-shaped member and has a through hole at a center portion thereof. The upper current collecting plate 22 has a recess portion recessed downward, and the positive electrode lead 20 is joined to the recess portion. An outer peripheral portion of the upper current collecting plate 22 contacts an outer peripheral portion of the sealing plate 24. The outer peripheral portion of the upper current collecting plate 22 is preferably joined to the sealing plate 24 by means of laser welding or the like.

The sealing plate 24 is a metallic plate-shaped member having no through hole. A projection projecting toward the outside of the battery is provided at a center portion of the sealing plate 24. The projection has, for example, a perfect circular shape in a top view.

Next, the positive electrode 11 and the protective tape 50 provided on the positive electrode 11 will be described in detail with reference to FIGS. 3 and 4. FIG. 3 is a diagram illustrating the positive electrode 11 and the negative electrode 12 in a developed state, and FIG. 4 is a sectional view of the positive electrode 11.

As illustrated in FIGS. 3 and 4, the positive electrode 11 has the positive electrode current collector 30, and the positive electrode mixture layer 32 provided on a surface of the positive electrode current collector 30. The positive electrode 11 is formed to be one size smaller than the negative electrode 12 in order to prevent precipitation of lithium during charging. That is, the positive electrode 11 is formed to be shorter in the longitudinal direction and the width direction than the negative electrode 12.

On the surface of the positive electrode 11, there is provided the positive electrode current collector exposed portion 34 from which the positive electrode current collector 30 is exposed without the positive electrode mixture layer 32 being provided. The positive electrode current collector exposed portion 34 is provided on, for example, each surface of the positive electrode 11. In the present embodiment, the positive electrode lead 20 is joined to the surface of the positive electrode current collector exposed portion 34 provided on an inner peripheral side of the positive electrode 11 by means of welding or the like. Alternatively, the positive electrode lead 20 may be joined to the surface of the positive electrode current collector exposed portion 34 provided on an outer peripheral side of the positive electrode 11.

As described above, a plurality of positive electrode leads 20 are joined to the positive electrode 11. Therefore, a plurality of positive electrode current collector exposed portions 34 are provided on the surface of the positive electrode 11. Alternatively, the positive electrode current collector exposed portion 34 to which the positive electrode lead 20 is not joined may be provided on the surface of the positive electrode 11. That is, more positive electrode current collector exposed portions 34 than the number of the positive electrode leads 20 may be provided on the surface of the positive electrode 11.

The positive electrode current collector exposed portion 34 is provided to an upper end 11A of the positive electrode 11. That is, the positive electrode current collector exposed portion 34 contacts only the upper end 11A of the positive electrode 11 and does not extend to a lower end 11B of the positive electrode 11. Thus, the positive electrode mixture layer 32 can be present between the positive electrode current collector exposed portion 34 and the lower end 11B of the positive electrode 11. As a result, the battery capacity of the non-aqueous electrolyte secondary battery 10 can be improved. However, the positive electrode current collector exposed portion 34 may be provided over the width direction of the positive electrode 11.

The shape and size of the positive electrode current collector exposed portion 34 can be appropriately set according to the shape and size of the positive electrode lead 20. The positive electrode current collector exposed portion 34 has, for example, a rectangular shape. The length of the positive electrode current collector exposed portion 34 along the longitudinal direction of the positive electrode 11 is, for example, greater than or equal to 5 mm and less than or equal to 50 mm. The positive electrode current collector exposed portion 34 is provided by, for example, intermittent coating in which a positive electrode mixture slurry is not applied to a part of the positive electrode current collector 30.

In the positive electrode lead 20, one end is connected to the positive electrode current collector exposed portion 34, and the other end extends toward the upper side of the positive electrode 11 in the width direction and is joined to the upper current collecting plate 22 (see FIG. 1). One end of the positive electrode lead 20 can be joined to the positive electrode current collector exposed portion 34 by means of, for example, ultrasonic welding. The positive electrode lead 20 may be made of any material which has conductivity, but is preferably made of a metal including aluminum as a main component.

The protective tape 50 that covers the positive electrode current collector exposed portion 34 is attached to the surface of the positive electrode 11. The protective tape 50 covers the whole surface of the positive electrode current collector exposed portion 34, a part of the positive electrode lead 20, and the positive electrode mixture layer 32 around the positive electrode current collector exposed portion 34. Providing the protective tape 50 makes it possible to reduce contact of the positive electrode current collector exposed portion 34 and the positive electrode lead 20 with the negative electrode 12 facing the positive electrode current collector exposed portion 34 and the positive electrode lead 20 when the separator 13 is damaged. As a result, an internal short circuit can be reduced.

In the protective tape 50, an upper end 50A of the protective tape 50 is located above an upper end 12A of the negative electrode 12. That is, the protective tape 50 has a facing region 51 facing the negative electrode 12 and a non-facing region 52 located on the upper side of the facing region 51 and not facing the negative electrode 12. In the present embodiment, the upper end 50A of the protective tape 50 is located above an upper end of the separator 13 (see FIG. 2).

The protective tape 50 is an adhesive tape that has a base material portion and an adhesive portion formed on one of surfaces of the base material. A heat-resistant layer including inorganic particles such as metal oxide can be provided between the base material portion and the adhesive portion. It is only required that the base material portion is made of an insulating resin, and as the base material portion, for example, polyphenylene sulfide (PPS), polyether ether ketone (PEEK), polyimide (PI), polypropylene (PP), polyethylene terephthalate (PET), polybutylene terephthalate (PBT), or the like can be used. The thickness of the base material portion is, for example, greater than or equal to 5 µm and less than or equal to 50 µm, and preferably, greater than or equal to 10 µm and less than or equal to 30 µm.

The adhesive portion is a region for causing the protective tape 50 to adhere onto the surface of the positive electrode 11. The thickness of the adhesive portion is, for example, greater than or equal to 1 µm and less than or equal to 30 µm, and preferably, greater than or equal to 5 µm and less than or equal to 25 µm. The adhesive portion can include at least one of a rubber-based polymer and an acrylic polymer. Since the rubber-based polymer and the acrylic polymer have adhesion, they can cause the protective tape 50 to adhere onto the surface of the positive electrode 11. To the adhesive portion, for example, a silicone-based polymer may be further added.

As illustrated in FIG. 3, at least one or more cuts 53 extending from the upper end 50A of the protective tape 50 toward the lower end 50B side of the protective tape 50 are provided in the non-facing region 52 of the protective tape 50. Providing the cuts 53 in the protective tape 50 makes it possible to provide flexibility to the upper end 50A of the protective tape 50. As a result, when a load is applied to the protective tape 50 from above, unintended bending of the protective tape 50 can be reduced. When the protective tape 50 is bent due to the load applied from above, the bent portion contacts the negative electrode 12 facing the bent portion, which may cause damage such as breakage to the negative electrode 12. That is, the positive electrode current collector exposed portion 34 is covered with the protective tape 50 having the cuts 53 in the upper end 50A, thereby making it possible to reduce damage to the negative electrode 12 due to bending of the protective tape 50 while reducing occurrence of an internal short circuit.

In the present embodiment, 10 cuts 53 extending along the width direction of the positive electrode 11 (width direction of the housing can 16) are provided in the protective tape 50. The cuts 53 are provided at positions not facing the positive electrode lead 20. This makes it possible to reduce occurrence of an internal short circuit due to contact of the positive electrode lead 20 with the negative electrode 12. The number and arrangement of cuts 53 can be appropriately set according to the sizes and the like of the protective tape 50 and the positive electrode lead 20.

At least some of the cuts 53 are preferably provided at substantially equal intervals in the longitudinal direction of the positive electrode 11. In this case, it becomes easy to provide flexibility to the upper end 50A of the protective tape 50. In the present embodiment, the cuts 53 are provided at substantially equal intervals in a region except for a region facing the positive electrode lead 20. An interval between the cuts 53 adjacent to each other in the longitudinal direction of the positive electrode 11 can be appropriately set according to the sizes and the like of the protective tape 50, but is, for example, greater than or equal to 0.5 mm and less than or equal to 10 mm.

In the width direction of the positive electrode 11, the length of the cuts 53 is preferably greater than or equal to 50% of the length of the non-facing region 52, and more preferably greater than or equal to 75% of the length of the non-facing region 52. That is, the cuts 53 may terminate at a middle point on the non-facing region 52. Setting the length of the cuts 53 to greater than or equal to 50% of the length of the non-facing region 52 makes it easy to provide flexibility to the upper end 50A of the protective tape 50. The length of the non-facing region 52 in the width direction of the positive electrode 11 can be appropriately set according to the battery performance and the like, and is, for example, greater than or equal to 0.1 mm and less than or equal to 3.0 mm.

The cuts 53 may extend to the facing region 51 beyond the non-facing region 52. On the other hand, the cuts 53 do not preferably face the positive electrode 11 from the perspective of reducing occurrence of an internal short circuit. The upper limit of the length of the cuts 53 is preferably, for example, less than or equal to 150% of the length of the non-facing region 52. Therefore, in the width direction of the positive electrode 11, the length of the cuts 53 is preferably greater than or equal to 50% and less than or equal to 150% of the length of the non-facing region 52, and more preferably greater than or equal to 75% and less than or equal to 150% of the length of the non-facing region 52.

In the longitudinal direction of the positive electrode 11, a ratio (L50/L20) of a length (L50) of the protective tape 50 to a length (L20) of the positive electrode lead 20 is preferably greater than or equal to 2.0 and less than or equal to 10.0, and more preferably greater than or equal to 3.0 and less than or equal to 8.0. In this case, an internal short circuit can be further reduced.

The cuts 53 can be formed by cutting the protective tape 50 from above with a cutting tool after the protective tape 50 is attached to the surface of the positive electrode 11. Alternatively, the protective tape 50 having the cuts 53 formed in advance may be attached to the surface of the positive electrode 11.

As described above, providing the cuts 53 in the upper end 50A of the protective tape 50 makes it possible to provide flexibility to the upper end 50A of the protective tape 50, and to reduce the unintended bending of the protective tape 50 when the load is applied to the protective tape 50. As a result, it is possible to reduce damage to the negative electrode 12 due to bending of the protective tape 50. That is, the positive electrode current collector exposed portion 34 is covered with the protective tape 50 described above, thereby making it possible to reduce damage to the negative electrode 12 due to bending of the protective tape 50 while reducing occurrence of an internal short circuit.

The above-described embodiment can be appropriately modified within the scope without departing from the spirit of the present disclosure. For example, in the above-described embodiment, the cuts 53 extend along the width direction of the positive electrode 11, but the present disclosure is not limited thereto. For example, the cuts 53 may extend along a direction inclined with respect to the width direction of the positive electrode 11. An inclination angle of an extending direction of the cuts 53 with respect to the width direction of the positive electrode 11 is, for example, greater than or equal to 0° and less than or equal to 45°.

In the above-described embodiment, the length of the cuts 53 in the width direction of the positive electrode 11 is the same in all the cuts 53, but the cuts 53 may have different lengths. For example, the length of the cuts 53 may be increased with increasing distance from the positive electrode lead 20.

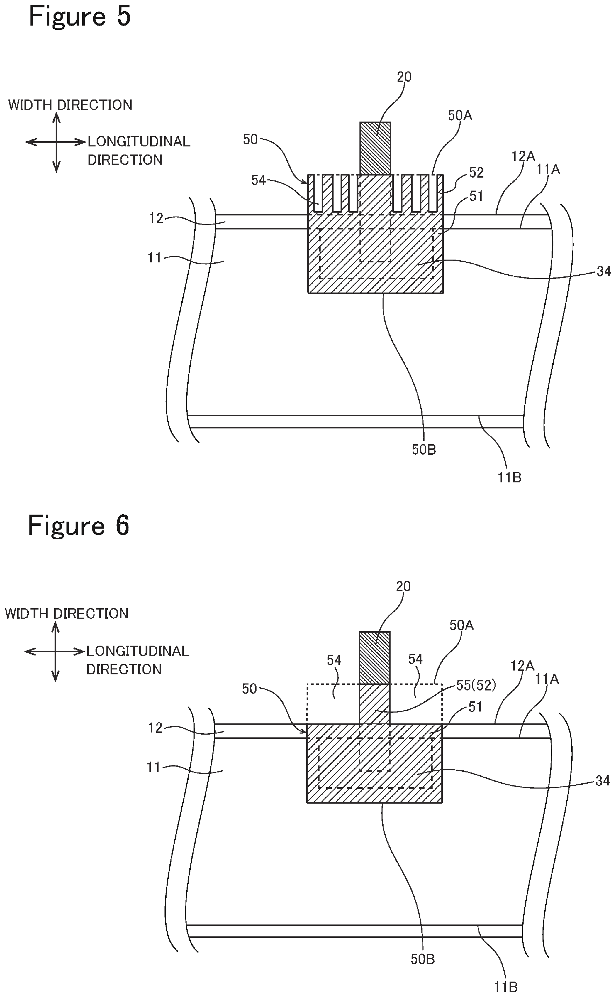

In the above-described embodiment, the cuts 53 are provided in the non-facing region 52 of the protective tape 50, but notches may be provided instead of the cuts 53 or in addition to the cuts 53. For example, as illustrated in FIG. 5, a plurality of notches 54 having a rectangular shape may be provided in the non-facing region 52 of the protective tape 50. Providing the notches 54 in the protective tape 50 makes it possible to provide flexibility to the upper end 50A of the protective tape 50. The width of the notches 54 (length along the longitudinal direction of the positive electrode 11) is, for example, greater than or equal to 0.05 mm and less than or equal to 3.0 mm. The size and arrangement of notches 54 can be appropriately set according to the size and arrangement of the above-described cuts 53.

As illustrated in FIG. 6, the notches 54 may be provided in a substantially entire region except for the region facing the positive electrode lead 20 in the non-facing region 52. That is, the protective tape 50 may have a facing region 51 facing the negative electrode 12 and a projecting region 55 projecting upward from the facing region 51 and facing the positive electrode lead 20.

The present disclosure will be further described with the following embodiments.

### Configuration 1:

A non-aqueous electrolyte secondary battery comprising: an electrode assembly in which a belt-shaped positive electrode and a belt-shaped negative electrode are wound with a separator interposed between the positive electrode and the negative electrode; and a bottomed cylindrical housing can that houses the electrode assembly, wherein the positive electrode has a positive electrode current collector and a positive electrode mixture layer provided on a surface of the positive electrode current collector, a positive electrode current collector exposed portion from which the positive electrode current collector is exposed is provided on a surface of the positive electrode, the positive electrode current collector exposed portion is covered with a protective tape, the protective tape has a facing region facing the negative electrode and a non-facing region not facing the negative electrode, and the non-facing region is provided with at least one or more cuts or notches extending from an upper end of the protective tape toward a lower end side of the protective tape.

### Configuration 2:

The non-aqueous electrolyte secondary battery described in Configuration 1, wherein a positive electrode lead is connected to the positive electrode current collector exposed portion, and the cuts and the notches do not face the positive electrode lead. Configuration 3:

The non-aqueous electrolyte secondary battery described in Configuration 1 or 2, wherein a plurality of the cuts are provided in the non-facing region, and at least some of the cuts are provided at substantially equal intervals in a longitudinal direction of the positive electrode.

### Configuration 4:

The non-aqueous electrolyte secondary battery described in any one of Configurations 1 to 3, wherein a plurality of the cuts are provided in the non-facing region, and an interval between the cuts adjacent to each other in a longitudinal direction of the positive electrode is greater than or equal to 0.5 mm and less than or equal to 10 mm.

### Configuration 5:

The non-aqueous electrolyte secondary battery described in any one of Configurations 1 to 4, wherein in a width direction of the positive electrode, a length of the cuts or the notches is greater than or equal to 50% of a length of the non-facing region. Configuration 6:

The non-aqueous electrolyte secondary battery described in any one of Configurations 1 to 5, wherein a length of the non-facing region in a width direction of the positive electrode is greater than or equal to 0.1 mm and less than or equal to 3.0 mm. Configuration 7:

The non-aqueous electrolyte secondary battery described in any one of Configurations 1 to 6, wherein a positive electrode lead is connected to the positive electrode current collector exposed portion, and in a longitudinal direction of the positive electrode, a ratio of a length of the protective tape to a length of the positive electrode lead is greater than or equal to 2.0 and less than or equal to 10.0.

### Configuration 8:

The non-aqueous electrolyte secondary battery described in any one of Configurations 1 to 7, wherein the notches have a rectangular shape.

### Configuration 9:

The non-aqueous electrolyte secondary battery described in any one of Configurations 1 to 8, wherein a plurality of the positive electrode current collector exposed portions are provided on a surface of the positive electrode.

### REFERENCE SIGNS LIST

10 Non-aqueous electrolyte secondary battery, 11 Positive electrode, 11A Upper end, 11B Lower end, 12 Negative electrode, 12A Upper end, 13 Separator, 14 Electrode assembly, 16 Housing can, 16A Bottom portion, 16B Grooved portion, 17 Sealing assembly, 18 Insulating plate, 18A Through hole, 20 Positive electrode lead, 21 Gasket, 22 Upper current collecting plate, 23 Lower current collecting plate, 24 Sealing plate, 30 Positive electrode current collector, 32 Positive electrode mixture layer, 34 Positive electrode current collector exposed portion, 40 Negative electrode current collector 42 Negative electrode mixture layer, 44 Negative electrode current collector exposed portion, 50 Protective tape, 50A Upper end, 50B Lower end, 51 Facing region, 52 Non-facing region, 53 Cut, 54 Notch, 55 Projecting region

## Claims

1. A non-aqueous electrolyte secondary battery comprising:
an electrode assembly in which a belt-shaped positive electrode and a belt-shaped negative electrode are wound with a separator interposed between the positive electrode and the negative electrode; and
a bottomed cylindrical housing can that houses the electrode assembly, wherein
the positive electrode has a positive electrode current collector and a positive electrode mixture layer provided on a surface of the positive electrode current collector,
a positive electrode current collector exposed portion from which the positive electrode current collector is exposed is provided on a surface of the positive electrode,
the positive electrode current collector exposed portion is covered with a protective tape,
the protective tape has a facing region facing the negative electrode and a non-facing region not facing the negative electrode, and
the non-facing region is provided with at least one or more cuts or notches extending from an upper end of the protective tape toward a lower end side of the protective tape.

2. The non-aqueous electrolyte secondary battery according to claim 1, wherein
a positive electrode lead is connected to the positive electrode current collector exposed portion, and
the cuts and the notches do not face the positive electrode lead.

3. The non-aqueous electrolyte secondary battery according to claim 1, wherein
a plurality of the cuts are provided in the non-facing region, and
at least some of the cuts are provided at substantially equal intervals in a longitudinal direction of the positive electrode.

4. The non-aqueous electrolyte secondary battery according to claim 1, wherein
a plurality of the cuts are provided in the non-facing region, and
an interval between the cuts adjacent to each other in a longitudinal direction of the positive electrode is greater than or equal to 0.5 mm and less than or equal to 10 mm.

5. The non-aqueous electrolyte secondary battery according to claim 1, wherein
in a width direction of the positive electrode, a length of the cuts or the notches is greater than or equal to 50% of a length of the non-facing region.

6. The non-aqueous electrolyte secondary battery according to claim 1, wherein in a width direction of the positive electrode, a length of the non-facing region is greater than or equal to 0.1 mm and less than or equal to 3.0 mm.

7. The non-aqueous electrolyte secondary battery according to claim 1, wherein
a positive electrode lead is connected to the positive electrode current collector exposed portion, and
in a longitudinal direction of the positive electrode, a ratio of a length of the protective tape to a length of the positive electrode lead is greater than or equal to 2.0 and less than or equal to 10.0.

8. The non-aqueous electrolyte secondary battery according to claim 1, wherein
the notches have a rectangular shape.

9. The non-aqueous electrolyte secondary battery according to claim 1, wherein
a plurality of the positive electrode current collector exposed portions are provided on a surface of the positive electrode.
